Europäisches Patentamt

European Patent Office

Office européen des brevets

(19)

(11) Publication number: **0 091 289**

A2

(12) **EUROPEAN PATENT APPLICATION**

(21) Application number: **83301841.9**

(22) Date of filing: **31.03.83**

(51) Int. Cl.³: **F 02 B 53/02**
**F 02 B 53/12, F 01 C 11/00**
**F 02 P 5/04**

(30) Priority: **31.03.82 US 363932**
**13.07.82 US 397870**
**22.02.83 GB 8304849**

(43) Date of publication of application:
**12.10.83 Bulletin 83/41**

(84) Designated Contracting States:
**AT BE CH DE FR GB IT LI LU NL SE**

(71) Applicant: Yang, Tai-Her
5-1 Tay Pyng St.
Shi Hwu Jenn Jang Huah Shiann(TW)

(72) Inventor: Yang, Tai-Her
5-1 Tay Pyng St.
Shi Hwu Jenn Jang Huah Shiann(TW)

(74) Representative: Arthur, Bryan Edward et al,
Withers & Rogers 4 Dyer's Buildings Holborn
London EC1N 2JT(GB)

(54) A linear or rotary type of engine driven with an air exchanging chamber means and an advanced ignition means adjustable with servo-drive means.

(57) A linear or rotary engine comprises two complementary parts having plane or arcuate surfaces in sealing sliding contact, one part being provided in its surface with a set of cylinders arranged in two rows, one row being for intake/compression and the other for explosion/exhaust, the cylinders of one row alternating with the cylinders of the other, the other part being provided in its surface with:

a row of air exchange chambers each of which at one point in the relative motion of the two parts connects adjacent intake/compression and explosion/exhaust cylinders,

two rows of rectractably sliding valves, each row being aligned with a row of cylinders so that during relative motion of the two parts, a valve can sweep through a cylinder,

inlet and exhaust ports adjacent respective ends of each air exchange chamber and an ignition spark plug or fuel injection nozzle located in each air exchange chamber or explosion/exhaust cylinder.

Also, an ignition timing control in which signals derived from inlet vacuum and engine speed are combined in a function generator or compared with stored correction values to provide a driving signal for mechanical or electronic ignition timing devices.

Fig.5

0091289

## A LINEAR OR ROTARY TYPE OF ENGINE DRIVEN WITH AN AIR EXCHANGING CHAMBER MEANS AND AN ADVANCED IGNITION MEANS ADJUSTABLE WITH SERVO-DRIVE MEANS

This invention relates to a linear or rotary type of engine provided with an air exchanging chamber means, and to an ignition advance means.

The engine comprises one or more sets of cylinders arranged in a given phase relation, in a plane or arcuate surface which is in contact with a complementary and relatively slidable surface through a lubricating oil film. In said engine a set of cylinders comprises two rows of cylinders, one row of cylinders arranged in series providing the intake and compression strokes, while the other row of cylinders arranged in series provides the explosion and exhaust strokes. Said two rows of cylinders are arranged with the cylinders of one row alternating with the cylinders of the other row. The cylinders are not overlapping but each cylinder of one row is connected across to an adjacent cylinder of the other row by means of an air exchanging chamber provided on the complementary sliding surface. The intake and compression cylinders and the explosion and exhaust cylinders may be provided in the surface of a part which moves relative to the engine while the air exchanging chambers may be provided in the complementary surface of a part which is fixed relative to the engine or vice versa. In line with the positions of said intake and compression cylinders, and the positions of said explosion and exhaust cylinders, a corresponding number of retractably sliding valves are provided in said complementary surface each valve being capable of projecting into a corresponding chamber and sealing the part of the chamber on one side of the valve from the part of the chamber on the other side. An appropriate ignition spark plug or oil injection nozzle is installed inside each air exchanging chamber, or explosion and exhaust cylinder, to initiate the combustion of fuel and so drive the moving part, i.e. to complete the Otto cycle (comprising intake, compression, explosion and exhaust) for the purpose of driving the corresponding planar or arcuate surface moving parts to generate a linear or rotary dynamic output. In order to improve the ignition advance function, a servo-driving ignition advance means that is adjustable by means of a stepper motor or a solenoid may be provided. This is actuated by an analog or digital comparator or a correction output generated by a difference between the sensed value of engine rotation speed and the intake vacuum and a pre-stored best correction value. This is an improvement on the well-known centrifugal block type and the vacuum type of lead-time ignitors which cannot perfectly match the lead-time ignition curve required by the engine.

The invention is now described with reference to the embodiment shown in the accompanying drawings in which:

Fig. 1 and 1-1 show  general arrangement of an engine with known fuel, cooling, lubrication, and transmission systems.

Fig. 2 shows in section embodiments of engine of drum-shaped rotation type or column-shaped type.

Fig. 3 shows in section an embodiment of engine using two annular parts.

Fig. 4 shows plan and sectional views of an embodiment of linear type engine including the cylinder set, air exchanging chambers, movable valves, and intake/ exhaust ports.

Fig. 5 shows the phase relation of the cylinder set and the air exchanging chambers in a rotary type engine.

Fig. 6 shows the fuel gas flow in the cylinder set through the movable valve and the air exchanging chamber during movement of the sliding part.

Fig. 7 shows the operation sequence during movement of the sliding part in a linear type of engine.

Fig. 8 shows in section and plan the exhaust structure of engine, in which a slot is provided at the end of cylinder so as to match during the next cycle with the exhaust port on the corresponding surface.

Fig. 9 shows the movable valve in this invention contacting the cylinder at a suitable angle to the direction of slide.

Fig. 10, 11 and 12 show an engine in which the sliding valves are connected to a central crankshaft.

Fig. 13 shows the end of a sliding valve provided with a sliding packing.

Fig. 14 shows an engine, in which the sliding valves are connected to external crankshafts.

Fig. 15 shows a linear type engine, in which the sliding valve in the fixed part is used for reciprocatingly driving a crank or other auxiliary means.

Fig. 16 shows a block diagram of an ignition means to be adjusted with a servo-drive.

Fig. 17 shows a block diagram of an ignition advancer to be adjusted with a linear solenoid that is driven by a comparator between a preset analog transducer and an analog control means.

Fig. 18 shows the arrangement of a linear solenoid coupled to the adjustable portion of a distributor for adjustment of timing.

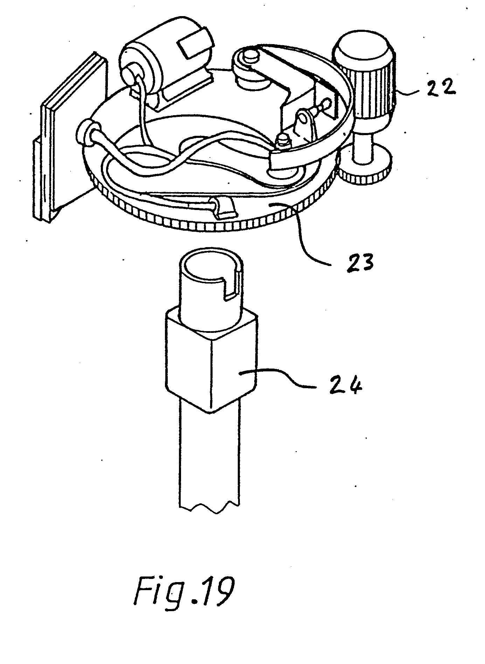

Fig. 19 shows the arrangement of a stepper motor coupled to the adjustable portion of the distributor for adjustment of timing.

Fig. 20 shows a block diagram of the advanced ignition adjustment of a solid state ignition means driven by a non-contact timing means and a controllable time-delay circuit, and also shows the advanced ignition operation of the engine at a constant speed during going down a slope.

Fig. 21 shows an embodiment of ignition adjustment using platinum contact points.

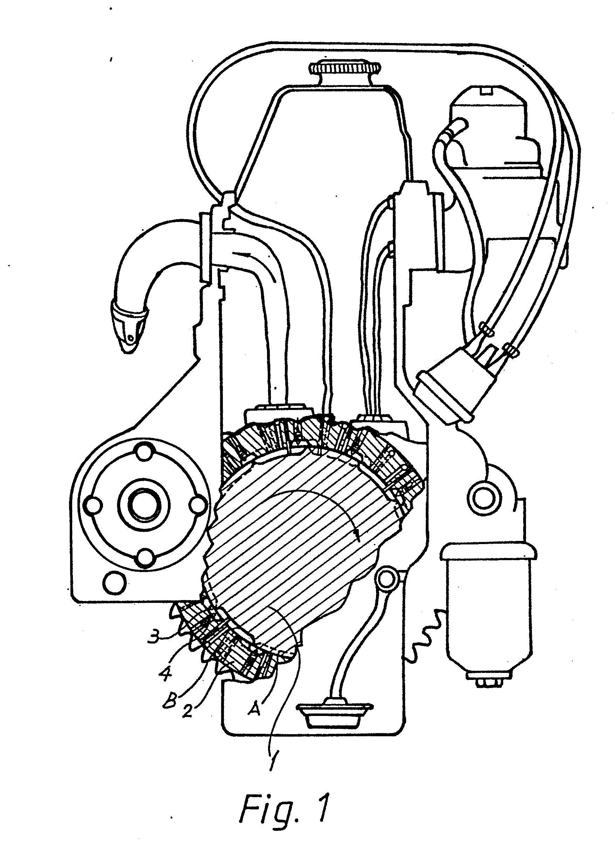

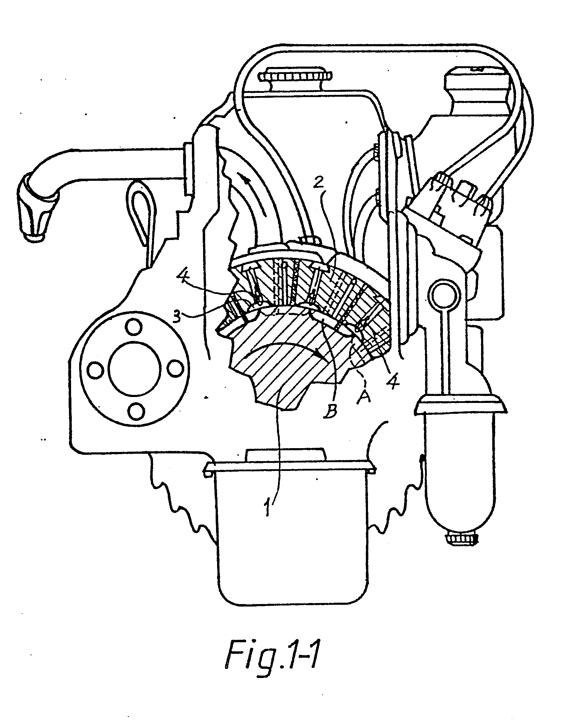

This invention provides a linear or rotary type of engine for cyclic operation with separate intake and explosion cylinders connected by an air exchanging chamber.  In addition to having the conventional engine components, such as fuel system, cooling system, lubrication system, and transmission system as shown in Figs. 1 and 1-1, this novel engine can generate dynamic output by means of linear type or rotary type drive, the feature of which is that said linear type or rotary type of engine is provided with cylinders formed in a sliding surface.

In Figs. 1 and 1-1 is shown a rotary engine in which the sliding surfaces are between moving part (rotor) (1) and fixed part (stator) (2).  Cylinders (A) for intake and compression and cylinders (B) for explosion and exhaust are connectable by air exchanging chambers (3) provided with spark plugs or injection nozzles (4).

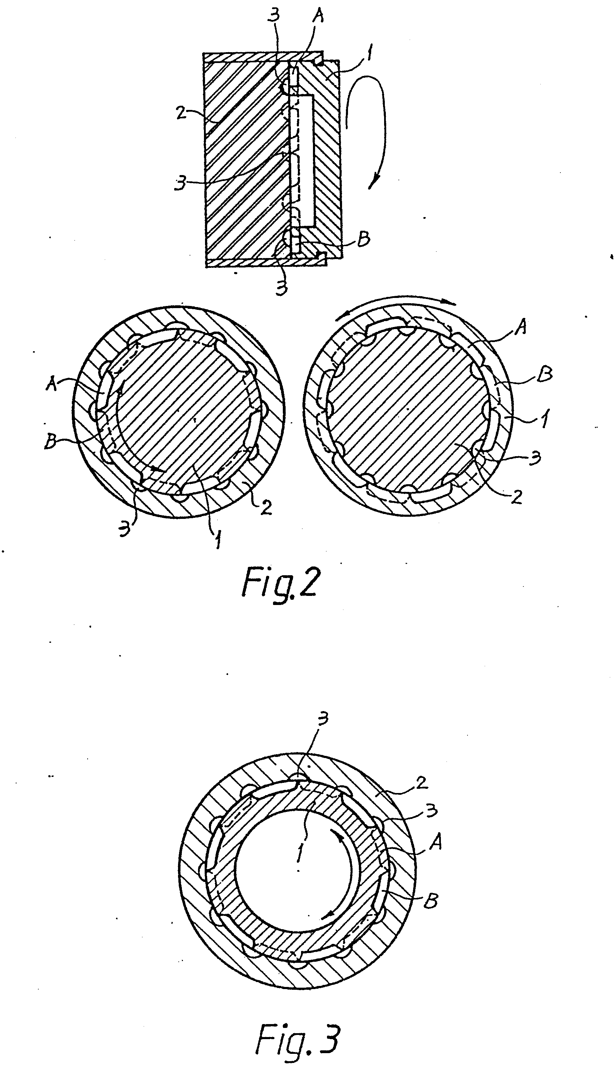

As shown in Fig. 2, said engine may be a type, in which either the inner part or the outer part is the rotor (1), and the other part is the stator (2); The two parts may both be designed as coaxial cylinders (as shown in Fig. 3) with their adjoining surfaces in close sliding contact. An oil film is present between the sliding surfaces to provide lubrication and a hermetic seal.

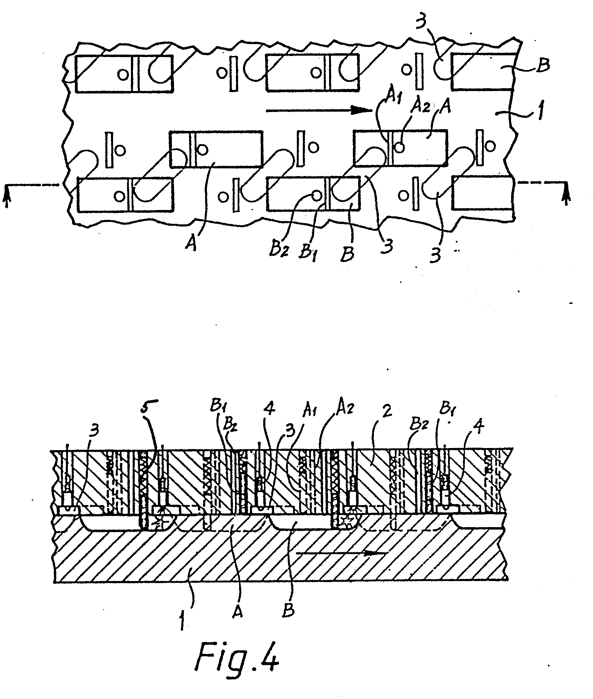

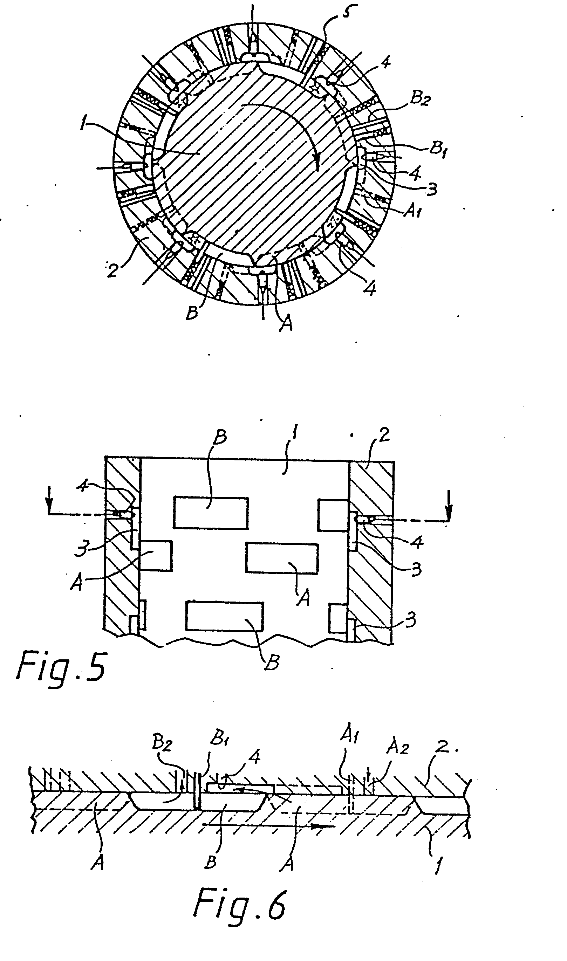

On one of said surfaces, one or more than one cylinder sets arranged in a given phase relation are used to perform Otto cycle comprising intake, compression, explosion, and exhaust so as to drive the sliding part (1) either linearly or rotating. As shown in Fig. 4 in relation to a linear engine and in Fig. 5 in relation to a rotary engine the cylinder set of said sliding part (1) comprises two rows of cylinder (A) (B), in which one row is the intake and compression cylinders (A), while the other row is the explosion and exhaust cylinders (B) which may be equal or un-equal to the length of the cylinder (A). A sectional view of said cylinders (A) (B) is shown in the Figs. 4 and 5 with their phase relation as shown in the plan views of Fig. 4 and 5 in which the cylinders (A) (B) of the two rows are arranged alternately but not overlapped.

The engines of Figs. 4 and 5 consist of a fixed part (2) and a sliding part (1). In said sliding part (1), a number of air exchanging chambers (3) each corresponding to a pair of cylinders (A) (B) in the two sets is provided across said cylinders (A) (B). The air exchanging chambers (3) are so arranged as to connect the two cylinders (A) (B) of the pair during the completion of compression stroke prior to the explosion stroke so as to let the compressed and atomized fuel enter the explosion cylinder (cylinder(B)) as shown in Fig. 6. The span between every air exchanging chambers (3) is the same as that between the cylinders (A) and (B). At a position inside the air exchanging chamber (3) and near said explosion and exhaust cylinder (B), a spark plug or an oil nozzle (4), depending on the fuel used, is installed in a recess in the fixed part (2). In a gasoline engine, a spark plug (4) will be used, while an oil nozzle is used for the diesel engine. Further, in said fixed part (2), a movable valve (A1), an intake port (A2), a movable valve (B1), and an exhaust port (B2) are provided opposite to the cylinder (A) and cylinder (B) respectively as shown in Figs. 4 and 5 Said movable valve (A1) and intake port (A2) are located after the air exchanging chamber (3) in the direction of movement of the moving part (1) and in the line of passage of the cylinder (A) row. The movable valve (A1) slides in a slot in fixed part (2) and is provided with a spring (5), by which the outer end of the valve is pressed into close contact with the bottom and the side surface of said cylinder (A). The sliding valve (A1) may be aligned at right angles or at a suitable other angle to the sliding part (1). When the sliding part (1) is in motion, air will be sucked into the compression cylinder (A) through intake port (A2).

The movable valve (B1) and the exhaust port (B2) are located forward of —————————————— the air exchange chamber (3) in the direction of movement of the moving part (1) and in the line of passage of the cylinder (B) row. The valves (B1) are sliding valves similar to valves (A1) and are pressed by a spring (5) into close contact with the bottom and side surface of the related explosion and exhaust cylinder (B) at a right angle or other suitable angle. The movable valves (A1, B1) when extended into the respective cylinders seal that part of the cylinder on one side of the valve from that part of the cylinder on the other side of the valve. In this way, for example, they block the waste gas in explosion stroke in the cylinder (B) and exhaust it through exhaust port (B2) during the motion of the sliding part (1).

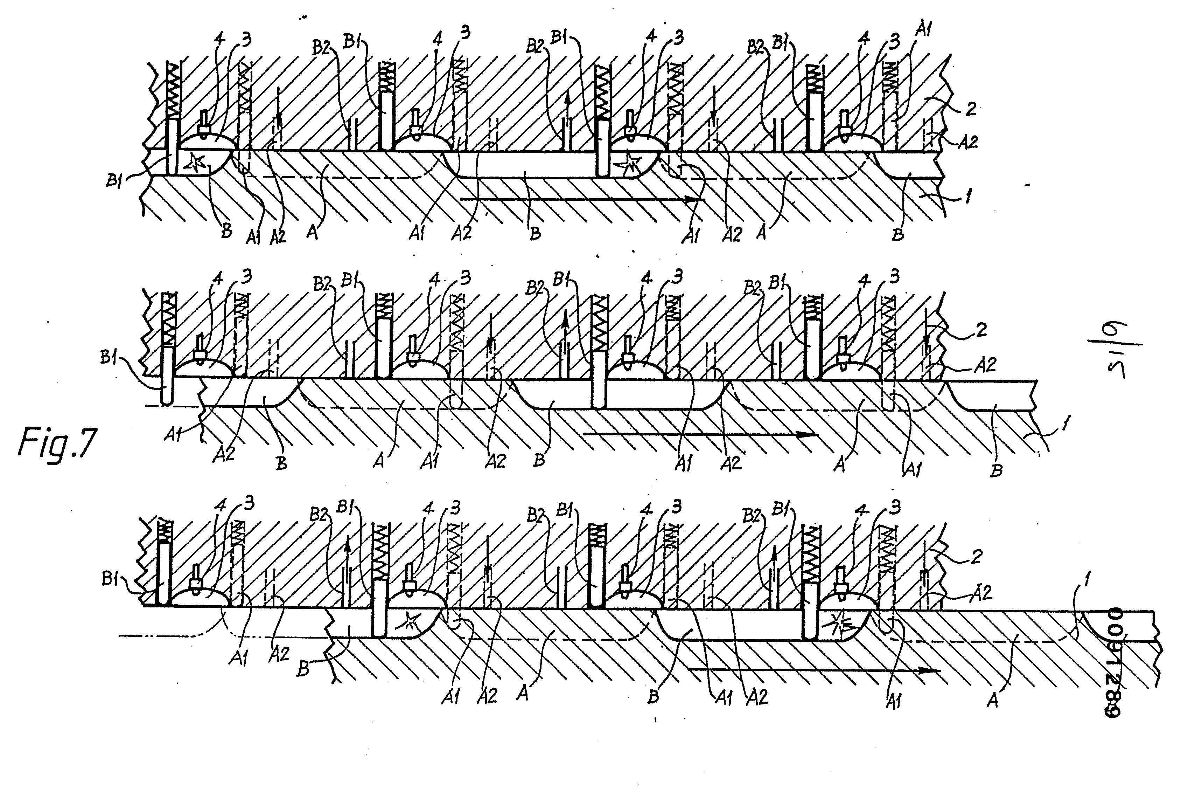

Referring to Fig. 7 when the sliding part (1) is driven by a starting motor or other means to slide or rotate to a direction indicated by the arrow, the cylinder (A) will first receive the movable valve (A1). There is also a movable valve (A1) between two cylinders (A) but that one is restricted into the fixed part (2). As cylinder (A) slides along, the space thereof that has slid over said movable valve (A1) is under low pressure and sucks air and fuel through the intake port (A2). As the cylinder (A) continues moving forwards, the air and fuel in that part of the cylinder (A) on the other side of the movable valve (A1) will be compressed. At the same time, movable valve (B1) will slide into cylinder (B). Now the air and fuel cylinder (A) will be compressed through the air exchanging chamber (3), into cylinder (B) under high pressure. As the sliding part (1) continuously moves forwards the air exchanging chamber (3) becomes disconnected from the intake and compression cylinder (A), and the spark plug (5) near the cylinder (B) will ignite the air/fuel mixture; the sliding part (1) continues to move forward being driven by means of the arcuate or oblique surface design at the leading end of the cylinder (B). The movable valve (B1) blocks off the waste gas generated during the preceding explosion in cylinder (B) and exhausts it through exhaust port (B2). After the sliding part (1), being driven by the preceding compressed fuel explosion, reaches the aforesaid movable valve (A1) to cause said valve to retract into the fixed part (2), said cylinder (A) starts the next cycle letting the movable valve (A1) slide in so as to have cylinder (A) suck air/fuel mixture into that part forward of the movable valve (A1), and to compress on the other side of movable valve (A1) the fuel/ air sucked into the cylinder (A) during the preceding cycle. As before, the air/fuel mixture is passed into cylinder (B) through the air exchanging chamber (3); then, the spark plug (4) inside the air exchanging chamber (3) will ignite the air/fuel mixture for continuously driving the sliding part (1).

The sets of cylinders may be staggered to provide a more continuous driving force.

The aforesaid engine may be driven with diesel oil or other fuel by using oil nozzle instead of spark plug (4) and by suitable changing the compression ratio. When the sliding part (1) is moving, air will be sucked into the compression cylinder (A) via the intake port (A2). The air in said cylinder (A) will be compressed into the air exchanging chamber (3) and the cylinder (B) by means of the movable valve (A1) in next cycle. When the sliding part (1) has continued to move forwards to separate the air exchanging chamber (3) from the cylinder (A), the air in the cylinder (B) has been compressed to a high pressure and temperature. At that moment, ————————————————————————— oil or other gas fuel is sprayed through a nozzle into the cylinder (B) to be exploded by the high pressure and high temperature and so continuously drive the sliding part (1).

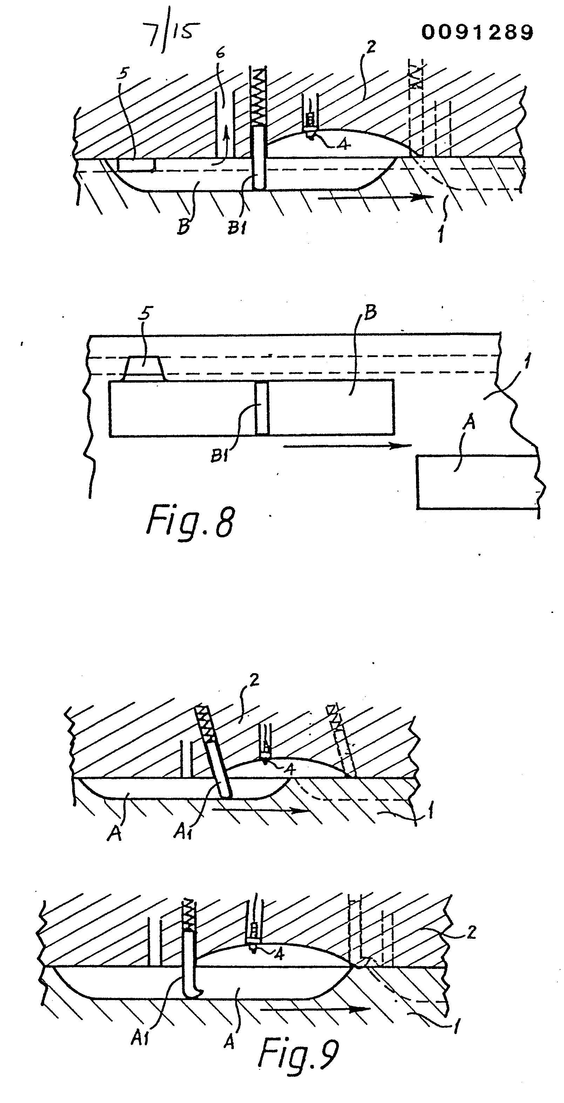

Further, exhausting of the exhaust gases can be carried out by another method of direct exhausting in next cycle; the structure arrangement for this method is shown in Fig. 8. At the trailing end of the explosion and exhaust cylinder (B), and at an angle to the direction motion a laterally extending slot (5) is provided. On the opposed sliding surface, an exhaust passage (6) is provided on the corresponding line of motion of the slot (5). During the final phase of explosion stroke, the engine is connected to said laterally extended slot (5) to exhaust the waste gas.

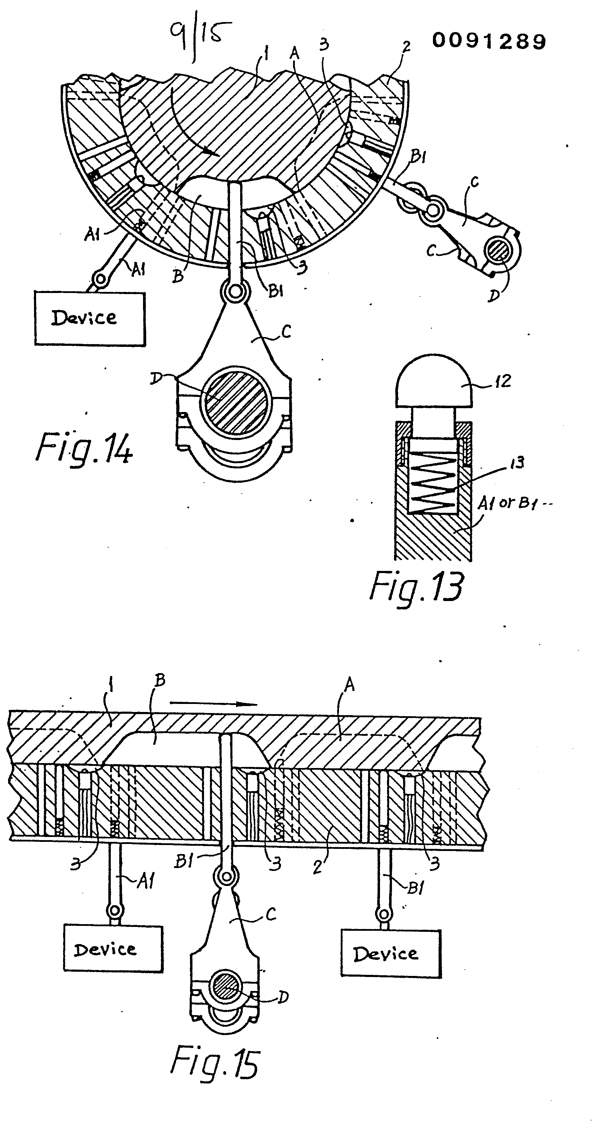

The movable valve (B1) of the engine of this invention may be of one-piece construction, or it may be provided with a spring-loaded head piece (12) of suitable friction resistant metal or alloy for contact with the cylinder walls, as shown in Fig. 13. Alternatively the head of the valve may be enlarged to present an arcuate face to the wall of the cylinder (A) (B) as shown in Fig. 9. Also as shown in Fig. 9 the line of movement of the valve may be normal to, or inclined to, the line of movement of part (1).

The movable valve (A1) may be arranged near the air exchanging chamber (3) as shown in Fig. 8 and 9. The movable valve (A1) may be installed at the leading side of the air exchanging chamber (3) with respect to the direction of movement of part (1) and on the compression cylinder (A) so as to have the gas fuel or the compressed air in cylinder (A) completely (100%) compressed into the cylinder (B) of the air exchanging chamber (3) upon movement of the sliding part (1). The movable valve (B1) may be installed near the trailing side of the air exchanging chamber (3).

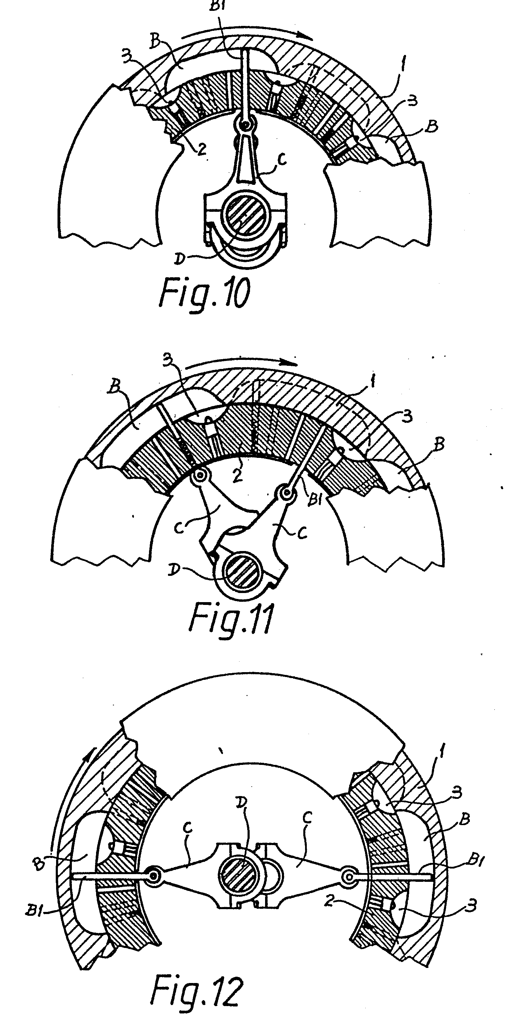

The dynamic output of this invention may be transmitted by means of the movable valve (A1) or (B1) pivotally connected to the connecting rod(C), and then by means of the cylinder set (A) (B) arranged in a selected phase relation to generate an Otto cycle for driving a crank (D) to provide conventional dynamic output. The outer ring may be a sliding part (1), and the inner ring may be a fixed part (2). By means of a suitable number of cylinder sets (A) (B) arranged in a slected phase relation, the dynamic output movable valves (A1) (B1) may be arranged in a vertical type, a "V"-shaped type, or lateral type to drive the crank (D) through connecting rods (C) as shown in Fig. 10, 11, and 12. Said inner ring may be a sliding part (1), and said outer ring may be a fixed part (2). The cylinder sets (A) (B) may be arranged in a selected phase relation to have the movable valves (A1) (B1) of each cylinder set in a vertical type arrangement so as to drive one or more sets of cranks (D) in different phase arrangement for a multi-shaft dynamic output as shown in Fig. 14.

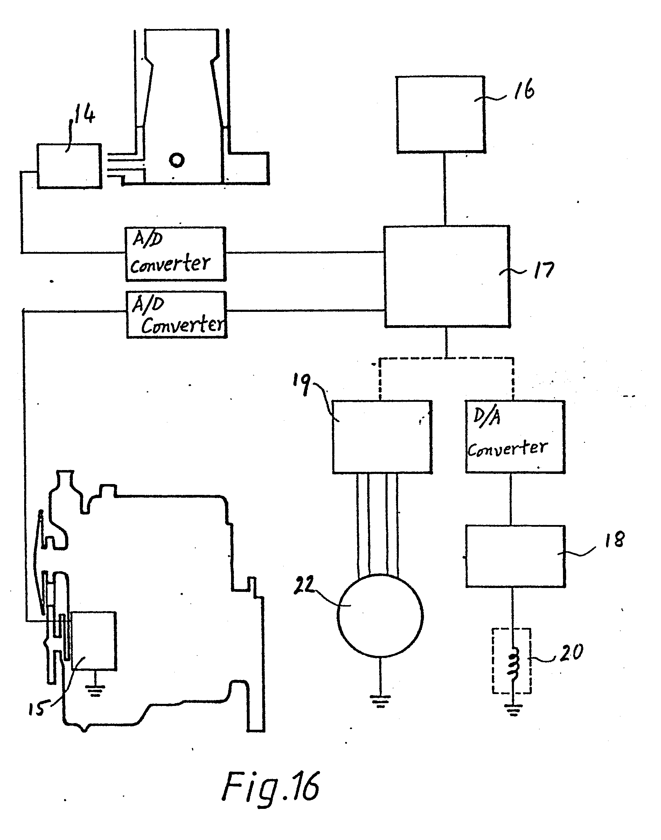

Further, referring to Fig. 15, in a linear type engine of this invention in which a sliding part (1), is driven, the movable valves (A1) (B1) reciprocatingly sliding inside the fixed part (2) may directly or indirectly drive and control other auxiliary means.

In the aforesaid means that uses said movable valve (A1) (B1) as a driving media, a sliding packing or head-piece (12) loaded by a spring (13), or other packing piece, may be used for keeping said movable valves (A1) (B1) and the cylinder bottom in close contact with each other during sliding so as to make sure the gas is being effectively compressed as shown in Fig. 13.

In a conventional engine, advancement of ignition during high speed running is done by means of centrifugal block and vacuum advance mechanisms.

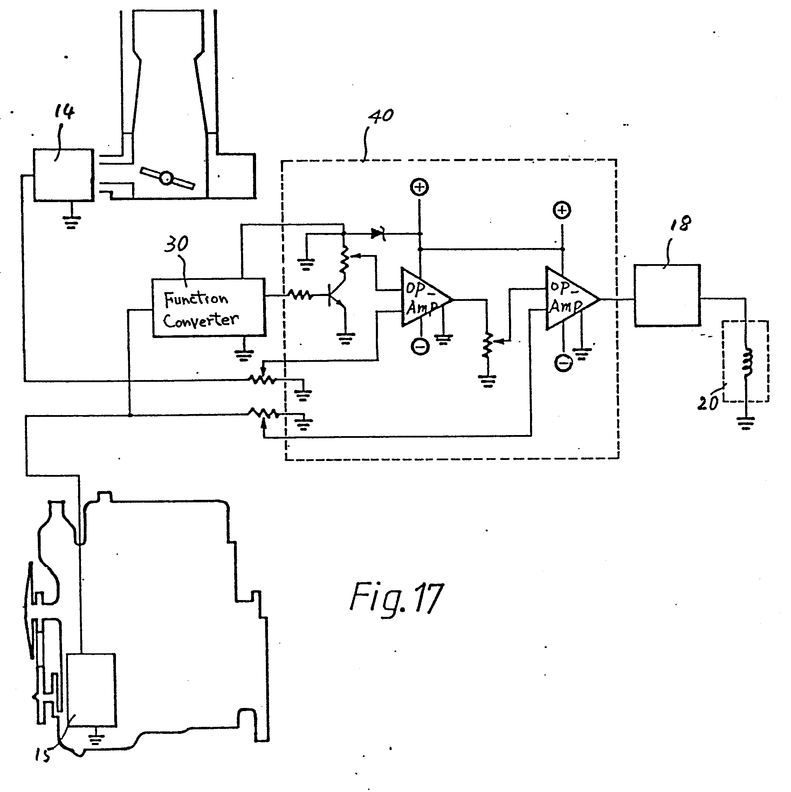

However, when engine speed is increased, the frequency of ignition and explosion is increased in a functional diagram manner, while the advanced ignition effect is increased in linear nature, i.e. the ignition means is unable to correctly match the higher explosion frequency. As a result, the maximum running speed of a conventional engine is liable to be limited by the drift effect of the ignition means, and therefore its efficiency is lowered. The servo-driven adjustment advanced ignition means in this invention can reduce this disadvantage of the known centrifugal block and vacuum advance mechanisms by perfectly compensating and matching the linear variation of advancement of ignition in the engine. The structure of said new ignition means is shown in Figs. 16 and 17, in which:

(a) The sensing means (14) at the intake is a known means that can convert the vacuum into a corresponding analog signal or digital signal.

(b) The engine speed sensing means (15) is a known means that can convert the rotational speed into an analog or digital signal.

(c) Storage means (16) stores the best correction values; it contains the best ignition advance data required by the engine stored in analog or digital form.

(d) Processing control means (17) is an analog comparator circuit or a digital CPU, which, when fed with the inputs from said sensing means (14) of intake vacuum and said engine speed sensing means (15), and by reference to the best data from the storage means (16) of the best correction value can generate a servo-driving signal.

(e)   Driving circuit (18) is an analog amplifier circuit which, by means of the driving signal of said processing control means, generates a corresponding voltage or current output, or a circuit (19) which can convert the digital pulse signal of said processing control means into a direction or quantity driving signal to a stepper motor.

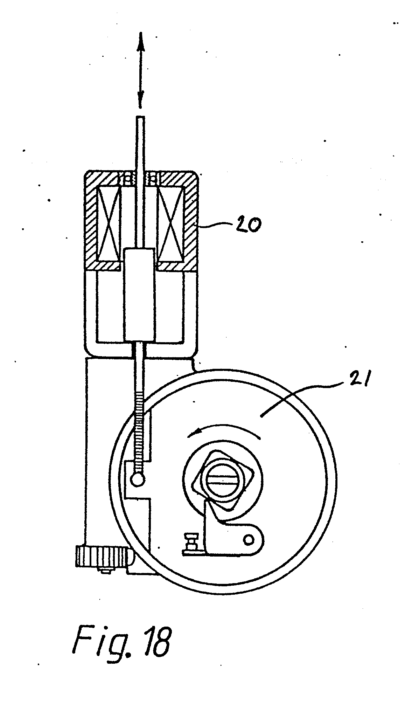

(f)   An analog type of servo-driving adjustment of ignition advance means is a linear solenoid (20) with return spring which can be driven with the analog signal of said driving circuit (18) so as to pull the movable part of the contact point seat (21) for adjusting the ignition time as shown in Fig. 18; the adjustment may also be done by means of a rotary solenoid with return spring being directly coupled to the movable contact point seat, or by means of a driving means being coupled to the movable contact point seat to receive the driving output from the aforesaid driving circuit.

(g)   A stepper type of servo-driving adjustment advanced ignition means:  The ignition time may be adjusted by means of a stepper motor (22) directly coupled to the movable contact point seat (23), or by means of a transmission means coupling (24) to the movable contact point as shown in Fig. (19) so as to be driven by the drive circuit.

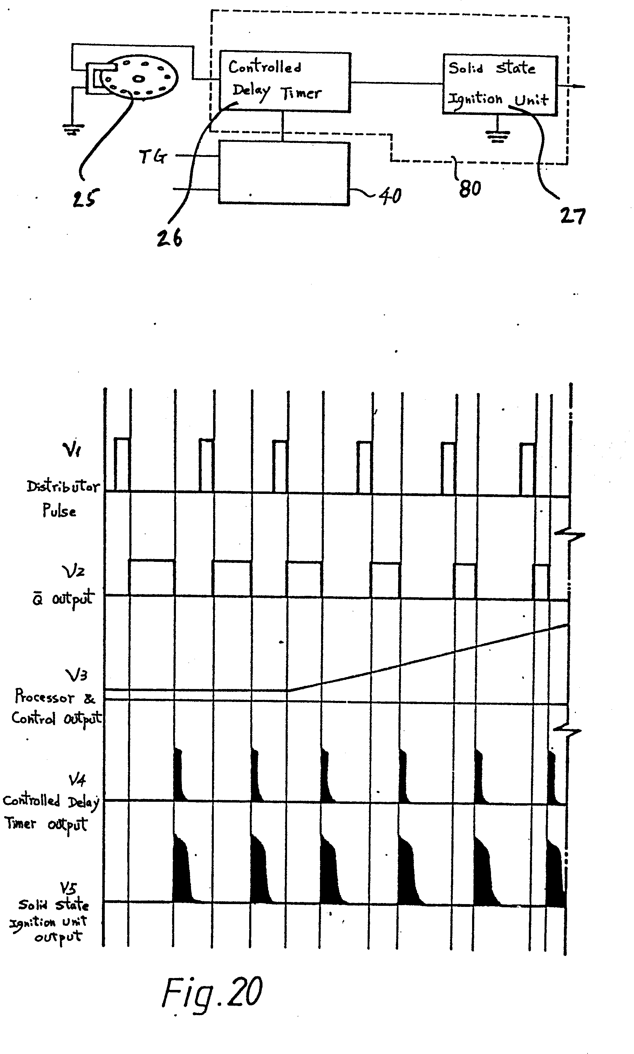

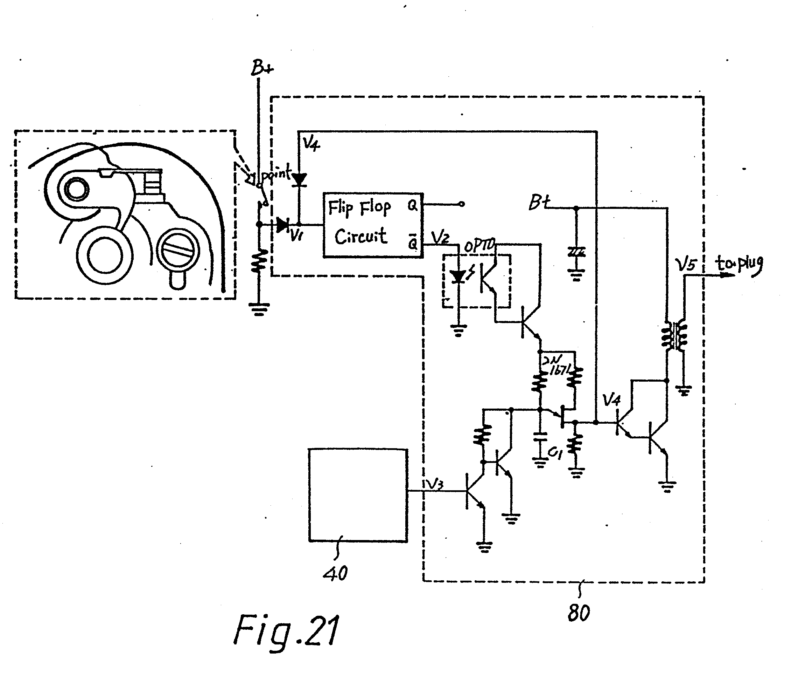

(h)   A solid state time-delay type of ignition advance means uses an electronic ignition means, of which the timing ignition reference circuit is furnished by the aforesaid analog or digital signal circuit so as to timely vary the input time of the ignition instruction signal for changing the ignition output time as shown in Fig. 20.  In Fig. (20) the ignition instruction input means is a photocell or an inductive non-contact type (25), or electric mechanical contact type ignition means being in synchronization with the engine; said ignition means can provide an ignition signal being slightly earlier than the timing ignition to be delivered into a controllable timedelay circuit (26) to trigger said solid state ignition means (27). Said controllable time-delay circuit is an analog comparator delay circuit made of a known linear IC and a time-delay circuit, or may be a digital circuit comprising a micro-computer; said circuit not only can receive the timing ignition signal, but also can receive the analog or digital signal from the aforesaid processing control means (4). Upon the advanced ignition signal from (4) being delivered to the aforesaid time-delay circuit, the operation of said circuit is to shorten the delay time as shown in Fig. 21.

In Fig. 17 the output signals from the sensing means 14 and 15 are fed into a function generator 40 to produce a final output signal to control ignition timing.

By means of the circuit shown by way of example in Fig.17, signals (a) and (b) from sensing means 14 and 15 respectively are converted into a final signal represented by the formula

$$k_3 \left[ k_1 f(b) + k_2 a \right] + k_4 b$$

where $k_1$, $k_2$, and $k_3$ are constants and f is a function determined by the electrical characteristics of the circuit.

CLAIMS:

1.      A linear or rotary type engine in which one or
more sets of cylinders are provided by chambers in a plane
or arcuate surface which is in sealing contact with a complementary surface and slideable relative thereto, each
set of cylinders comprising two rows of chambers, each
row arranged in the line of relative sliding of the two
surfaces, one row providing a series of intake and compression cylinders and a parallel row providing a series
of explosion and exhaust cylinders, the cylinders in one
row alternating with the cylinders in the parallel row and
each cylinder of one row being connectable to an adjacent
chamber of the other row over part of the relative sliding
travel of the two surfaces through an air exchanging chamber
provided by a recess in the complementary surface;

there also being provided in the complementary surface:

inlet and exhaust ports connectable over part of
the relative sliding travel of the two surfaces with
corresponding intake and exhaust chambers in the other
surface;

two rows of sliding valves slideable into recesses
in the complementary surface each of which can, over part of
the relative sliding travel of the two surfaces, project into
a corresponding chamber to sealingly divide the chamber into
two portions; and

in each air exchanging chamber, means for igniting
or injecting fuel;

the whole being arranged so that on relative sliding
motion of the two surfaces an Otto cycle can be completed
in which:

as a valve traverses an intake/compression cylinder
air or air/fuel mixture is drawn through an inlet port into that part of the cylinder behind the valve, a charge of air or air/fuel mixture drawn into the cylinder in the previous cycle is compressed in front of the valve and then transferred through the air exchanging chamber into the explosion/exhaust cylinder,

fuel is injected and ignited or the fuel/air mixture is ignited,

the ignited charge expands behind the valve traversing the explosion/exhaust cylinder thereby driving the one sliding surface relative to the other,

any ignited charge from the previous cycle being swept out in front of the valve through the exhaust port.

2.    An engine as claimed in Claim 1 in which each chamber of an explosion/exhaust cylinder is provided at its trailing end with means for by-passing the valve when it reaches that point to permit the ignited charge to exhaust through the exhaust port.

3.    An engine that can generate a dynamic output with a linear type or rotary type of drive, comprising in addition to conventional engine components, such as the fuel system, the cooling system, the lubrication system, and the transmission system, one or more than one set of cylinders arranged in a selected phase relation and located in one of two mechanical plane or arc surfaces in close contact with a lubrication oil film therebetween, each set of cylinders con sisting of two rows of cylinders, of which one row is the intake and compression cylinders in series, while the other row is the explosion and exhaust cylinders in series; said two rows of cylinders being arranged alternately but not overlapped, and connectable together by an air exchanging chamber in the corresponding sliding surface,

- 3 -                        0091289

said intake and compression cylinders and said explosion and exhaust cylinders, if desired, being located in the surface of a moving part of the engine while the air exchanging chambers are located at a suitable position in the surface of a fixed part of the engine or vice versa; and positioned with respect to said intake and compression cylinders and said explosion and exhaust cylinders, a number of reciprocatingly movable valves corresponding to that of the cylinders are provided on said corresponding surface together with a spark plug or injection nozzle installed in the air exchanging chamber or the explosion and exhaust cylinders, timed to explode the fuel and drive the moving part and by completing the Otto Cycle (comprising intake, compression, explosion and exhaust) to generate a linear or rotary dynamic output.

4.      An engine as claimed in Claim 1, 2 or 3, comprising:
in the moving part, a number of air exchanging chambers corresponding to the number of cylinders in each row, the air exchanging chambers in every phase being so arranged as to have pairs of cylinders of each type connected to each other during the completion of compression stroke but prior to explosion stroke so as to let the air or air/ fuel intake compressed in an intake/compression cylinder enter into the explosion cylinder; the span between every air exchanging chamber being the same as that between the cylinders;
and at a position inside the air exchanging chamber and near said explosion and exhaust cylinder, a spark plug installed in the fixed piece in a concealed manner; the electrode of said spark plug being used for igniting the highly compressed fuel gas in said explosion cylinder;
in the aforesaid fixed part, a movable valve and

- 4 -

0091289

an intake port and a movable valve and an exhaust port are provided on the opposite side to the cylinders;

one set of movable valves and intake ports are located adjacent to the forward rotation side of the air exchanging chamber and on the line of moving passage of the intake and compression cylinder row;

the movable valve can extend out by means of a spring and may be pressed into the fixed part by the pressure of the corresponding cylinder wall so as to have the movable valve in close contact with the bottom and the side surface of said cylinder at a right angle or at a suitable angle so as to slide so that when the sliding part is in motion, the fuel gas in the compression cylinder will be timely sucked in through intake port;

the other set of movable valves and exhaust ports are located at the rear side of the chamber on the line of moving passage of the explosion and exhaust cylinder row, and are in close contact with the bottom and side surface of the explosion and exhaust cylinders at a right angle or other suitable angle so as to slide; and said movable valve can extend or retract in the fixed part by means of a spring so as to block the waste gas in explosion stroke in cylinder and to exhaust it through the exhaust port during the movement of the sliding part.

5. An engine as claimed in Claim 1, 2 3 or 4, wherein the operation feature is that upon the sliding part being driven with a starting motor or other means to slide or rotated in a direction indicated by an arrow, the intake and compression cylinder will first let the movable valve slide in; and at the same time, there is other movable valve between the two intake and compression cylinders, but it is pushed into the fixed part; and owing to the sliding of the intake and compression cylinder, the space that is slid over said movable valve is under low pressure state so as to be able to swiftly suck the fuel through the intake port; and during the sliding part moving forwards, the fuel in the reverse rotation side of the movable valve in the intake and compression cylinder will be compressed; and simultaneously the other movable valve will also slide into the explosion and exhaust cylinder: now the fuel in intake and compression cylinder will be compressed into the movable valves through the air exchanging chamber and is under high pressure state, and when the sliding part continuously moving forwards until the air exchanging chamber being separated from the intake and compression cylinder, the spark plug near the explosion and exhaust. cylinder will ignite and trigger an explosion; and the sliding part continues to move forward by means of the arc or oblique surface designed near the side of the explosion and exhaust cylinder being driven; and movable valve on the explosion and exhaust cylinder will block the waste gas generated during preceding explosion of cylinder, and have it being exhausted through exhaust port; and after the sliding part being driven with the preceding compressed fuel explosion, and reaching the aforesaid movable valve to cause said valve being pushed into the fixed part, said intake and compression cylinder starts the next cycle to let the movable valve slide in so as to have the sliding part sliding continuosuly, and to have the forward rotation side of the movable valve on the intake and compression cylinders swiftly sucking fuel, and to have the reverse rotation side of movable valve starting to compress the fuel gas sucked in cylinder (A) during the preceding cycle, and to let it enter into the explosion and exhaust cylinder through the air exchanging chamber; and the spark plug inside the air exchanging chamber will ignite the gas to explode for continuously driving the sliding part; and by means of the continuously sliding or rotation of said sliding part, each of the movable valves will enter into the cylinder to suck in fuel and to compress simultaneously the fuel having been sucked in during the preceding cycle so as to have the fuel gas being continuously compressed into the air exchanging chamber and the various explosion and exhaust cylinders at corresponding positions; and upon the movable valve sliding into the oblique side of the explosion and exhaust cylinder and just passing over the movable valve, the spark plug will ignite the fuel to explode for driving the sliding part and to block the waste gas generated in cylinder by the explosion stroke during the preceding cycle and to exhaust it; and then the same cycle is started again to generate a driving force.

6.       An engine as claimed in any one of Claims 1 to 4 wherein said engine may be driven with diesel oil or other fuel by using oil nozzle instead of spark plug and by suitably changing the compression ratio; and when the sliding part moving and under the low pressure state caused by the compression cylinder sliding, air will quickly be sucked in via the intake port; and the air in said intake and compression cylinder will be compressed into the air exchanging chamber and the explosion and exhaust cylinder via the movable valve in next cycle; and during the sliding part continuously moving forwards to have the air exchanging chamber separated from the intake and compression cylinder, the air in the explosion and exhaust cylinder has been compressed into a high pressure state; and at that moment the oil nozzle will timely spray a gas mixed with diesel oil or other gas fuel to be exploded by the high pressure and high temperature so as to continuously drive the sliding part.

7.        An engine as claimed in any one of Claims 1 to 6 wherein the movable valve has a built-in part or a suitable metal or alloy being combined with the friction portion of cylinder wall and being extendible by means of a spring or hydraulic means; or it is designed to have a suitable, slight arc so as to suitably lead the inner pressure of the cylinders.

8.        A diesel engine as claimed in Claim 1, 2 or 3 wherein the dynamic output of this invention is achieved by means of the movable valve or pivotally connected to the connecting rod, and then by means of the cylinder set arranged in a selected phase relation to generate an Otto cycle for driving a crank to provide conventional dynamic output; and the outer ring may be a sliding part, and the inner ring may be a fixed part; by means of a suitable number of cylinder sets arranged in a selected phase relation, the dynamic output movable valves may be arranged in a vertical type, a "V"-shaped type, or a lateral type to drive the crank; and said inner ring may be a sliding part, while the outer ring may be a fixed part; and the cylinder sets may be arranged in a selected phase relation to have the movable valves of each cylinder set being in the vertical type arrangement so as to drive one or more sets of crank in different phase arrangement for a multi-shaft dynamic output; and during the linear type engine of the present invention driving the sliding part, the movable valves reciprocatingly sliding inside the fixed part may directly or indirectly drive or control other auxiliary means.

9.      An ignition advancing means for a linear or rotary engine comprising:

means to sense the vacuum in the engine intake and convert the value into a corresponding analog or digital signal,

means to sense the engine speed and convert the value into a corresponding analog or digital signal,

means for storing ignition timing correction values, and

means for comparing the vacuum and speed signals with the stored correction values and generating a servo-driving signal for adjustment of the ignition timing.

10.     An ignition advancing means as claimed in Claim 9 in which the servo-driving signal operates a stepper motor or a solenoid coupled to a movable contact point seat in the ignition circuit.

11.     An ignition advancing means as claimed in Claim 9 in which the driving signal is fed into an electronic time-delay control circuit to control the delay applied to an ignition signal.

12.     A servo-driving adjustment advanced ingition means, of which the adjustment may be done with a stepper motor or a solenoid that is to be actuated by an analog or digital comparator or a correction output generated by a difference between the sensing valve of engine rotation speed, the intake sucking force, and the pre-stored best correction valve so as to drive the aforesaid means to make timely advanced ignition, and its main structures are as follows:

1) a sensing means of intake sucking force, which is a known means able to convert the sucking force, into corresponding analog or digital signal;

2) an engine speed sensing means, which is a known means able to convert the rotation speed into an analog or digital signal;

3) a storage means of the best correction valve, which can have the best advanced ignition data required by engine stored in analog or digital form;

4) a processing control means, which is an analog comparator circuit or a digital CPU, and which, by means of the inputs from said sensing means of intake sucking force and said engine speed sensing means, can obtain the best data from the storage means of the best correction valve so as to generate a servo-driving signal;

5) a driving circuit, which is an analog amplifier circuit, and can, by means of the driving signal of said processing control means, generate a corresponding voltage or current output, or can convert the digital pulse signal of said processing control means into a direction or quantity driving signal to the stepper motor;

6) an analog type of servo-driving adjustment advanced ignition means, which is a linear solenoid with return spring, and may be driven with the analog signal of said driving circuit so as to pull the movable part of the contact point seat for adjusting the ignition time, or the said adjustment may also be done by means of a rotary solenoid with return spring being directly coupled to the movable contact point seat, or by means of a driving means being coupled to the movable contact point seat to receive the driving output from the aforesaid driving circuit; and

7) a stepper type of servo-driving adjustment advanced ignition means, of which the ignition time may be adjusted by means of a stepper motor directly coupling to

- 10 -

0091289

the movable contact point so as to be driven by the drive circuit.

13. A solid state time-delay type of ignition advances means, which uses an electronic ignition means, of which the timing ignition reference circuit is furnished by the aforesaid analog or digital signal circuit mentioned in Claim 10, 11 or 12 so as to timely vary the input time of the ignition instruction signal for changing the ignition output time; and said ignition means is a photo cell or an inductive non-contact type, or electric-mechanical contact type ignition means being in synchronization with the engine, and can provide an ignition signal being slightly earlier than the timing ignition to be delivered into a controllable time-delay circuit to trigger said solid state ignition means; and said controllable time-delay circuit is an analog comparator delay circuit made of a known linear IC and a time-delay circuit, or may be a digital circuit made of a micro-computer; and said circuit not only can receive the timing ignition signal, but also can receive the analog or digital signal from the aforesaid processing control means so as to shorten the delay time upon the advanced ignition input signal coming and to provide timely ignition.

14. An ignition advancing means for a linear or rotary engine comprising:

means to sense the vacuum in the engine intake and convert the value into a corresponding analog or digital signal,

means to sense the engine speed and convert the value into a corresponding analog or digital signal,

means for generating a signal which is a function

0091289

of the above two variable signals, the nature of the function being determined by selection of the electrical characteristics of the function generator, and

means for applying the resulting signal to adjust the ignition timing.

*Fig. 1*

Fig.1-1

Fig.2

Fig.3

Fig.4

**Fig. 5**

**Fig. 6**

Fig.7

Fig.8

Fig.9

Fig.10

Fig.11

Fig.12

0091289

Fig.14

Device

Fig.13

12

13

A1 or B1

Fig.15

Device

Device

Fig.16

Fig.17

*Fig. 18*

Fig.19

0091289

Fig.20

Fig.21